# EUROPÄISCHE PATENTSCHRIFT

(11) **EP 1 894 787 B1**
(45) Veröffentlichungstag und Bekanntmachung des Hinweises auf die Patenterteilung: **01.04.2009**
(21) Anmeldenummer: 07016614.5
(22) Anmeldetag: 24.08.2007
(51) Int. Cl.: B60R 9/06

(54) **Kraftfahrzeug mit einem ausziehbaren Heckträger**
Motor vehicle with an extendable rear carrier
Véhicule automobile avec porte-charge arrière pour véhicule

(30) Priorität: 29.08.2006 DE 102006040391
(43) Veröffentlichungstag der Anmeldung: 05.03.2008
(73) Patentinhaber: GM Global Technology Operations, Inc., Detroit, MI 48265-3000 (US)
(72) Erfinder: Fambach, Ulrich, 65760 Eschborn (DE); Hofmann, Hendrik, 55270 Klein-Winternheim (DE); Schober, Uwe, 65468 Trebur (DE)
(74) Vertreter: Weber, Almut

(56) Entgegenhaltungen:
- EP-A- 1 574 395
- BE-A6- 1 012 537
- DE-A1- 10 231 963
- DE-A1- 10 252 132
- DE-A1- 10 257 903

## Beschreibung

Die Erfindung bezieht sich auf ein Kraftfahrzeug mit einer Entriegelungseinrichtung für einen unter einem eine Rückwand aufweisenden Heck ausziehbaren Heckträger, wobei die Entriegelungseinrichtung einen mit Arretiermitteln für den Heckträger zusammenwirkenden Lösehebel umfasst.

Ein derartiges Kraftfahrzeug mit einem unterhalb des Kraftfahrzeugs aus seinem Heck ausziehbaren und wieder einfahrbaren Heckträger ist aus der Praxis bekannt, wobei der Heckträger üblicherweise mittels Arretiermitteln, die beispielsweise ein Schnappschloss umfassen, in seiner Ruheposition festgelegt ist. Durch eine Beaufschlagung eines Lösehebels des Entriegelungselementes werden die mit dem Lösehebel gekoppelten Arretiermittel freigegeben, wodurch der Heckträger in seine ausgezogene Gebrauchsposition überführt werden kann. Das Entriegelungselement ist insofern nachteilig, als es mit verhältnismäßig großem Aufwand an einer geeigneten Stelle innerhalb des Kraftfahrzeugs zu montieren ist.

Die DE 102 31 963 A1 offenbart einen ausziehbaren Lastenträger für ein Kraftfahrzeug mit einer Lastenaufnahme, die mittels eines Schienensystems verschiebbar gelagert ist. Der Lastenträger umfasst eine Fixiereinrichtung mit der die Lastenaufnahme wahlweise in einer eingefahrenen Stellung und mindestens einer Betriebsstellung sicherbar ist. Eine Ausziehmechanik ist derart ausgelegt, dass bei einer Betätigung einer Entriegelungsmechanik für die Fixiereinrichtung ein Auswerfer die Lastenaufnahme aus der eingefahrenen Stellung in Richtung der Betriebsstellung verfährt.

Es ist Aufgabe der Erfindung, ein Kraftfahrzeug der eingangs genannten Art zu schaffen, dessen Entriegelungseinrichtung für den Heckträger mit einfachen Mitteln kostengünstig an dem Kraftfahrzeug montierbar ist.

Erfindungsgemäß wird die Aufgabe dadurch gelöst, dass der Lösehebel mittels einer Halteeinrichtung zum einen kraftschlüssig und zum anderen kraftformschlüssig mit der Rückwand verbunden ist, die eine Öffnung zur Durchführung des Lösehebels aufweist.

Damit wird ein Kraftfahrzeug zur Verfügung gestellt, dessen Lösehebel für den Heckträger mittels der Halteeinrichtung komplikationslos und kostengünstig aufgrund der Öffnung in der Rückwand an dem Kraftfahrzeug montierbar ist. Somit ist auch möglich, den Lösehebel an einem Kraftfahrzeug mit dem Heckträger als Sonderausstattung an der standardisierten Rückwand zu befestigen.

Um eine zuverlässige Festlegung zu ermöglichen, ist bevorzugt die Halteeinrichtung im Längsschnitt gesehen im Wesentlichen Z-förmig ausgestaltet und umfasst einen Basissteg, von dem sich einerseits ein Steckschenkel und andererseits ein Befestigungsschenkel erstreckt. Zweckmäßigerweise ist die Halteeinrichtung im montierten Zustand mit dem Steckschenkel in die Öffnung eingesteckt und über den Befestigungsschenkel mit der Rückwand verschraubt. Dementsprechend ist der Steckschenkel einer nach außen gerichteten Seite und der Befestigungsschenkel einer nach innen zugewandten Seite der Rückwand zugeordnet. Die Halteeinrichtung wird demnach einfach in die Öffnung eingesteckt und komplikationslos mit der Rückwand über den Befestigungsschenkel verschraubt. Dies erspart erhebliche Montagekosten und ist zudem leicht zu bewerkstelligen.

In Ausgestaltung ist der Lösehebel an dem Befestigungsschenkel schwenkbar gelagert. Der Lösehebel ist aus einer Verriegelungsposition in eine Entriegelungsposition überführbar, wobei die dem Heckträger zugeordneten Arretiermittel mittels Löseelementen, wie z. B. Bowdenzügen, ver- bzw. entriegelt werden. Die Löseelemente sind selbstverständlich sowohl mit dem Lösehebel als auch mit den entsprechenden Arretiermitteln verbunden. Vorteilhaft ist darüber hinaus, dass der Lösehebel den Arretiermitteln räumlich nah zugeordnet ist, weshalb der Montageaufwand für die Löseelemente verhältnismäßig gering ist.

Zur Realisierung einer Platz sparenden Anordnung und einer einfachen Handhabung des Heckträgers weist bevorzugt die Rückwand einen an den Querschnitt des Heckträgers angepassten Ausschnitt auf. Der Heckträger ist demnach leicht von dem Heck kommend in Richtung zu einer Kraftfahrzeugfront unter das Kraftfahrzeug einschiebbar.

Zweckmäßigerweise ist der Rückwand an ihrer Innenseite ein Verkleidungselement, vorzugsweise ein Kunststoffelement, zugeordnet, das mit einer zur Öffnung in der Rückwand korrespondierenden Ausnehmung für den Lösehebel versehen ist. Das die Form einer Basisverkleidung aufweisende Verkleidungselement kann als Standard verwendet werden und wird durch das Einbringen der Öffnung an den jeweiligen Anwendungsfall, also beispielsweise eine Sonderausstattung eines Serien-Kraftfahrzeugs mit dem Heckträger, angepasst.

Nach einer Weiterbildung ist zur verschiebbaren Lagerung dem Heckträger ein Querträger zugeordnet, der im Wesentlichen U-förmig mit einem Lagersteg und U-Schenkeln ausgestaltet ist, wobei an den U-Schenkeln endseitig jeweils mit teleskopierbaren Lagerelementen verbundene Fortsätze angeordnet sind. Zweckmäßigerweise sind die konsolenartigen Lagerelemente parallel sowie beabstandet zueinander und parallel zur Fahrzeuglängsachse ausgerichtet. Um zusätzliche karosserieseitige Versteifungen zu vermeiden, sind bevorzugt die Lagerelemente an Anbindungspunkten mit der Karosserie verbunden, die alternativ zur Festlegung einer Anhängerzugvorrichtung bzw. eines Aufprallbegrenzers dienen.

Zur Versteifung ist ein Karosserieboden im Bereich des eingeschobenen Heckträgers mit Verstärkungsträgern versehen, die quer zu einer Fahrzeuglängsachse verlaufen. Die Verstärkungsträger lassen sich auf dem Karosserieboden von der Innenseite des Kraftfahrzeuges nachträglich befestigen, weshalb dieser sowohl bei einem Kraftfahrzeug mit Heckträger als auch bei einem Kraftfahrzeug ohne Heckträger identisch ausgebildet sein kann.

Aufgrund der zuvor erläuterten Maßnahmen ist die Montage des Heckträgers, insbesondere unter Produktionsbedingungen vereinfacht, wodurch die Produktionskosten des Kraftfahrzeugs erheblich vermindert sind. Durch die einfache Ausgestaltung reduziert sich die Anzahl erforderlicher Bauteile und Operations- bzw. Montageschritte wesentlich.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand eines Ausführungsbeispieles unter Bezugnahme auf die zugehörigen Zeichnungen näher erläutert. Es zeigt:

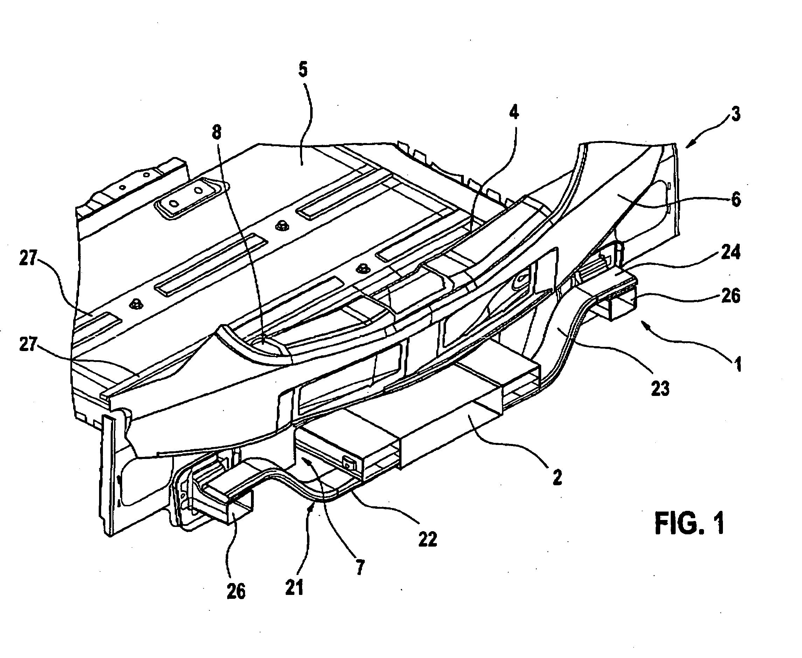

- Fig. 1: eine perspektivische Teilansicht eines Hecks eines erfindungsgemäßen Kraftfahrzeugs,

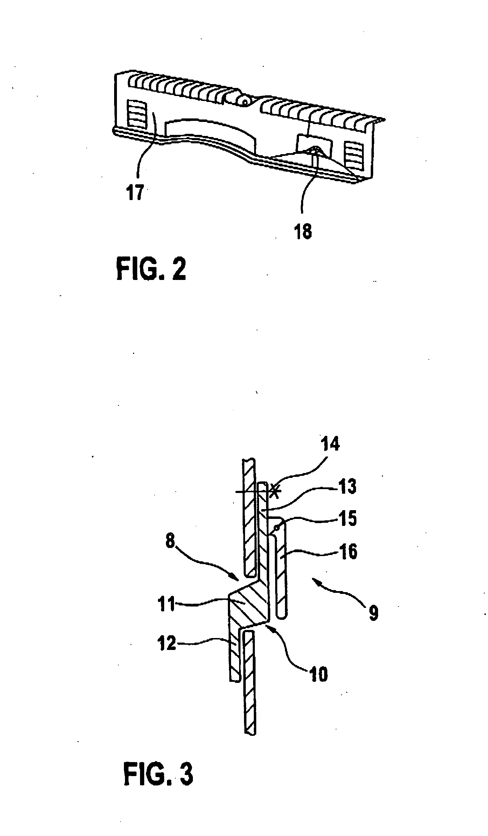

- Fig. 2: eine perspektivische Darstellung eines Verkleidungselementes für eine Rückwand des Kraftfahrzeuges und
- Fig. 3: einen Querschnitt einer Entriegelungseinrichtung für einen Heckträger des Kraftfahrzeuges.

In den unterschiedlichen Figuren sind gleiche Teile stets mit denselben Bezugszeichen versehen, weswegen diese in der Regel auch nur einmal beschrieben werden.

Das Kraftfahrzeug ist mit einem unter seinem Heck 1 angeordneten, ausziehbaren Heckträger 2 versehen. Im Bereich des eingeschobenen Heckträgers 2 umfasst ein Karosserieboden 5 zu seiner Stabilisierung zwei parallel sowie beabstandet zueinander angeordnete Verstärkungsträger 27, die senkrecht zu einer Fahrzeuglängsachse ausgerichtet sind. Die Verstärkungsträger 27 sind von der Innenseite des Kraftfahrzeuges auf dem Karosserieboden 5 festgelegt. Das Heck 1 weist eine zur Verstärkung aus zwei Bauteilelementen 4, 6 gebildete Rückwand 3 auf, die sowohl miteinander als auch mit einer Karosserie des Kraftfahrzeuges verschweißt sind.

Die Rückwand 3 ist mit einem Ausschnitt 7 für den Heckträger 2 und einer Öffnung 8 zur Aufnahme eines mit Arretiermitteln für den Heckträger 2 zusammenwirkenden Lösehebels 16 einer Entriegelungseinrichtung 9 versehen. Der Lösehebel 16 ist mittels einer Halteeinrichtung 10 zum einen kraftschlüssig und zum anderen kraftformschlüssig mit der Rückwand 3 verbunden. Die Halteeinrichtung 10 ist im Längsschnitt gesehen im Wesentlichen Z-förmig gestaltet und umfasst einen Basissteg 11, von dem sich einerseits ein Steckschenkel 12 und andererseits ein Befestigungsschenkel 13 erstreckt. Der Basissteg 11 ist dicker als der Steckschenkel 12 und der Befestigungsschenkel 13 ausgebildet.

Mit dem Steckschenkel 12 ist die Halteeinrichtung 10 hinter die verstärkte Rückwand 3 in einen zwischen den beiden Bauteilen 4 und 6 gebildeten Zwischenraum eingesteckt und über seinen Befestigungsschenkel 13 an einer Innenseite der Rückwand 3 mittels einer Schraube 14 mit der Rückwand 3 verschraubt. Dadurch ist die Halteeinrichtung 10 einerseits durch die Steckverbindung kraftschlüssig und andererseits durch die Schraubverbindung kraftformschlüssig mit der Rückwand 3 verbunden.

Die Halteeinrichtung 10 trägt an ihrem Befestigungsschenkel 13 ein Lager 15 für den Lösehebel 16, der derart mit Löseelementen zusammenwirkt, dass die Arretiermittel, die beispielsweise ein Schnappschloss umfassen, zur Festlegung des Heckträgers 2 in seiner eingeschobenen Ruheposition gelöst werden, wonach der Heckträger 2 zur Überführung in seine ausgezogene Gebrauchsposition freigegeben ist.

Der Rückwand 3 ist ein als Kunststoffteil ausgestaltetes Verkleidungselement 17 zugeordnet, das bevorzugt zur visuellen Verkleidung der Innenseite der Rückwand 3 dient. In das Verkleidungselement 17 ist eine zur Öffnung 8 in der Rückwand 3 korrespondierende Ausnehmung 18, beispielsweise durch Stanzen, eingebracht. Das Verkleidungsteil 17 ist trotz des an der Rückwand 3 befestigten Lösehebels 16 problemlos montierbar, da dieser die Ausnehmung 18 des Verkleidungselementes 17 durchgreift und dadurch von einem Innenraum des Kraftfahrzeugs, nämlich einem Kofferraum, zugänglich ist.

Zur Lagerung des Heckträgers 3 ist heckseitig ein Querträger 21 vorgesehen, der im Wesentlichen U-förmig ist und einen Lagersteg 22 umfasst, von dem sich U-Schenkel 23 erstrecken, die jeweils endseitig Fortsätze 24 aufweisen. Der Querträger 21 ist einstückig durch Umformung hergestellt. Die U-Schenkel 23 sind, bezogen auf den Lagersteg 22, in einem stumpfen Winkel von dem Lagersteg 22 abgebogen und die zueinander entgegengesetzt orientierten Fortsätze 24 verlaufen parallel zu dem Lagersteg 23.

Mit den Fortsätzen 24 ist der Querträger 21 auf teleskopierbaren Lagerelementen 26 angeordnet, die parallel und beabstandet zueinander zu der Längsachse des Kraftfahrzeuges an Anbindungspunkten befestigt sind, wobei die Anbindungspunkte der jeweils als einteilige Konsole ausgeführten Lagerelemente 26 für den Heckträger 3 identisch mit denen einer Anhängerzugvorrichtung bzw. mit denen eines Aufprallbegrenzers sind. Die Fortsätze 24 sind mit den Lagerelementen 26 durch Verschweißen oder Verschrauben fest verbunden.

### Bezugszeichenliste

- 1.: Heck
- 2.: Heckträger
- 3.: Rückwand
- 4.: Bauteil v. 3
- 5.: Karosserieboden
- 6.: Bauteil v. 3
- 7.: Ausschnitt
- 8.: Öffnung
- 9.: Entriegelungseinrichtung
- 10.: Halteeinrichtung
- 11.: Basissteg
- 12.: Steckschenkel
- 13.: Befestigungsschenkel
- 14.: Schraube
- 15.: Lager
- 16.: Lösehebel
- 17.: Verkleidungselement
- 18.: Ausnehmung
- 19.:
- 20.:
- 21.: Querträger
- 22.: Lagersteg
- 23.: U-Schenkel
- 24.: Fortsätze
- 25.:
- 26.: Lagerelemente
- 27.: Verstärkungsträger

## Patentansprüche

1. Kraftfahrzeug mit einer Entriegelungseinrichtung (9) für einen unter einem eine Rückwand (3) aufweisenden Heck (1) ausziehbaren Heckträger (2), wobei die Entriegelungseinrichtung (9) einen mit Arretiermitteln für den Heckträger (2) zusammenwirkenden Lösehebel (16) umfasst, **dadurch gekennzeichnet, dass** der Lösehebel (16) mittels einer Halteeinrichtung (10) zum einen kraftschlüssig und zum anderen kraftformschlüssig mit der Rückwand (3) verbunden ist, die eine Öffnung (8) zur Durchführung des Lösehebels (16) aufweist.

2. Kraftfahrzeug nach Anspruch 1, **dadurch gekennzeichnet, dass** die Halteeinrichtung (10) im Längsschnitt gesehen im Wesentlichen 2-förmig ausgestaltet ist und einen Basissteg (11) umfasst, von dem sich einerseits ein Steckschenkel (12) und andererseits ein Befestigungsschenkel (13) erstreckt.

3. Kraftfahrzeug nach Anspruch 1 oder 2, **dadurch gekennzeichnet, dass** die Halteeinrichtung (10) im montierten Zustand mit dem Steckschenkel (12) in die Öffnung (8) eingesteckt und über den Befestigungsschenkel (13) mit der Rückwand (3) verschraubt ist.

4. Kraftfahrzeug nach einem der Ansprüche 1 bis 3, **dadurch gekennzeichnet, dass** der Lösehebel (16) an dem Befestigungsschenkel (13) schwenkbar gelagert ist.

5. Kraftfahrzeug nach einem der Ansprüche 1 bis 4, **dadurch gekennzeichnet, dass** die Rückwand (3) einen andern Querschnitt des Heckträgers (2) angepassten Ausschnitt (7) aufweist.

6. Kraftfahrzeug nach einem der Ansprüche 1 bis 5, **dadurch gekennzeichnet, dass** der Rückwand (3) an ihrer Innenseite ein verkleidungselement (17) zugeordnet ist, das mit einer zur öffnung (8) korrespondierenden Ausnehmung (18) für den Lösehebel (16) versehen ist.

7. Kraftfahrzeug nach einem der Ansprüche 1 bis 6, **dadurch gekennzeichnet, dass** dem Heckträger (2) ein Querträger (21) zu seiner Lagerung zugeordnet ist, der im Wesentlichen U-förmig mit einem Lagersteg (22) und U-Schenkeln (23) ausgestaltet ist, wobei an den U-Schenkeln (23) endseitig jeweils mit teleskopierbaren Lagerelementen (26) verbundene Fortsätze (24) angeordnet sind.

8. Kraftfahrzeug nach Anspruch 7, **dadurch gekennzeichnet, dass** die konsolenartigen Lagerelemente (26) parallel sowie beabstandet zueinander und parallel zur Fahrzeuglängsachse ausgerichtet sind.

9. Kraftfahrzeug nach Anspruch 7 oder 8, **dadurch gekennzeichnet, dass** die Lagerelemente (26) an Anbindungspunkten mit der Karosserie verbunden sind, die alternativ zur Festlegung einer Anhängerzurrvorrichtung bzw. eines Aufprallbegrenzers dienen.

10. Kraftfahrzeug nach einem der Ansprüche 1 bis 9, **dadurch gekennzeichnet, dass** ein Karosserieboden (5) im Bereich des eingeschobenen Heckträgers (2) mit Verstärkungsträgern (27) versehen ist, die quer zu einer Fahrzeuglängsachse verlaufen.

11. Entriegelungseinrichtung für einen unter einem Heck (1) eines Kraftfahrzeuges nach einem der Ansprüche 1 bis 10, ausziehbaren Heckträger (3), die einen mit Arretiermitteln für den Heckträger (2) zusammenwirkenden Lösehebel (16) umfasst, der an einer im Querschnitt im Wesentlichen Z-förmig ausgestalteten Halteeinrichtung (10) zur karosserieseitigen Befestigung schwenkbar gelagert ist.

## Claims

1. Motor vehicle with an unlocking device (9) for an extendable rear carrier (2) under a rear end (3) equipped with a rear panel (1), wherein the unlocking device (9) comprises a release lever (16) connected with the rear carrier (2) by locking means, **characterized in that** the release lever (16) on one side is positively tied and on the other side shape-positively tied by a restraint (10) to the rear end (3) being equipped with an opening (8) for the lead through of the release lever (16).

2. Motor vehicle according to claim 1, **characterized in that** the restraint (10) displayed in the longitudinal section is essentially designed as Z-shaped by comprising a basic bar (11) from which on one side there is an insertion axle stub (12) and on the other side a fastening axle stub (13) spreading out.

3. Motor vehicle according to the claims 1 or 2, **characterized in that** in the assembled condition the restraint (10) is inserted into the opening (8) with an insertion axle stub (12) and that it is bolt together with the rear end (3) by the fastening axle stub (13).

4. Motor vehicle according to one of the claims 1 to 3, **characterized in that** the release lever (16) is pivoted on the fastening axle stub (13).

5. Motor vehicle according to one of the claims 1 to 4, **characterized in that** the rear end (3) is equipped with a cutout (7) adapted to the cross section of the rear carrier (2).

6. Motor vehicle according to one of the claims 1 to 5, **characterized in that** the rear end (3) on its internal side is attributed to a covering element (17) which is equipped with a cut (18) for the release lever (16) corresponding to the opening (8).

7. Motor vehicle according to one of the claims 1 to 6, **characterized in that** a cross bearer (21) is attributed to the mounting of the rear carrier (2), wherein this cross bearer is essentially U-shaped and equipped with a mounting bar (22) and with a U-shaped axle stubs (23), wherein on the endings of the U-shaped axle stubs (23) there are respectively arranged prolongations (24) connected with the telescopic mounting elements (26).

8. Motor vehicle according to claim 7, **characterized in that** the console-shaped mounting elements (26) are aligned in a parallel and distanced way one to another and in a parallel orientation to the longitudinal axle of the motor vehicle.

9. Motor vehicle according to the claims 7 or 8, **characterized in that** the mounting elements (26) are connected with the car body on connection points, which alternatively serve as fastening element for the lashing device of a trailer or of a crash delimiter.

10. Motor vehicle according to one of the claims 1 to 9, **characterized in that** a car body floor pan (5) in the area of the inserted rear carrier (2) is equipped with reinforcing bearing elements (27) diagonally extending to one of the longitudinal axles of the motor vehicle.

11. Unlocking device for an extendable rear carrier (3) under the rear panel (1) of a motor vehicle according to one of the claims 1 to 10, which comprises a release lever (16) connected with the rear carrier (2) by locking means, wherein the release lever is essentially pivoted to the fastening on the side of the car body on a restraint (10), having the shape of a Z in the cross section.

## Revendications

1. Véhicule avec un équipement de déverrouillage (9) pour une poutrelle arrière à rallonges(2) sous une arrière existante (1) de sa face arrière (3), d'où l'équipement de déverrouillage (9) comprend un levier d'annulation (16) concomitant avec des moyens d'arrêt pour la poutrelle arrière (2), **caractérise en ce que**, le levier d'annulation (16) est relié d'un côté par adhérence et de l'autre côté par adhérence de forme avec la face arrière (3) au moyen d'un équipement d'arrêt (10), qui présente une ouverture (8) pour la mise en exécution du levier d'annulation (16).

2. Véhicule selon la revendication 1, **caractérise en ce que**, l'équipement d'arrêt (10), vue sur la coupe longitudinale, est essentiellement élaboré en forme de Z et comprend une passerelle de base (11), à partir duquel s'étend d'un côté un pied caché (12) et de l'autre côté un pied fixé (13).

3. Véhicule selon les revendications 1 ou 2, **caractérise en ce que**, l'équipement d'arrêt (10) se cache dans l'ouverture (8) avec le pied caché (12) dans le montage et est vissé à la face arrière (3) en passant par le pied fixé (13).

4. Véhicule selon l'une des revendications 1 à 3, **caractérise en ce que**, le levier d'annulation (16) est posé de façon orientable sur le pied fixé.

5. Véhicule selon l'une des revendications 1 à 4, **caractérise en ce que**, la face arrière (3) présente en coupe transversale de la poutrelle à rallonges (2) une coupure adaptée.

6. Véhicule selon l'une des revendications 1 à 5,
**caractérise en ce que**, la face arrière (3) est classée sur sa partie interne à un élément de déguisement (17), lequel est apposé avec une exclusion (18) correspondant pour le levier d'annulation (16).

7. Véhicule selon l'une des revendications 1 à 6, **caractérise en ce que**, à la poutrelle à rallonges (2) est classée une poutrelle transversale (21) à son palier, qui est essentiellement en forme de U avec une passerelle du palier (22) et des pieds en U (23) situés à la fin de chacune des protubérances (24) reliées avec des éléments en palier télescopiques (26).

8. Véhicule selon la revendication 7, **caractérise en ce que**, les éléments du palier liés à la console (26) sont rangés parallèlement ainsi séparés les uns les autres et parallèles au grand axe du véhicule.

9. Véhicule selon les revendications 7 ou 8, **caractérise en ce que**, les éléments du palier (26) sont reliés à la carrosserie par des points d'attachement, qui servent d'alternative à la fixation d'un dispositif de remorquage ou bien d'une délimitation des chocs.

10. Véhicule selon l'une des revendications 1 à 9, **caractérise en ce que**, une base de la carrosserie (5) est apposée avec des poutrelles de consolidation (27) dans le cadre de la poutrelle arrière à rallonges (2), qui traverse de manière transversale le grand axe du véhicule.

11. Equipement de déverrouillage pour une poutrelle arrière à rallonges (3) sous une arrière (1) d'un véhicule selon l'une des revendications 1 à 10, qui comprend un levier d'annulation en concomitants (16) avec des moyens d'arrêt pour la poutrelle arrière (2), qui est fixé d'une manière orientable par rapport à la carrosserie à un équipement d'arrêt (10) essentiellement organisé en forme de Z en coupe transversale.
